# EUROPEAN PATENT APPLICATION

(11) **EP 1 940 012 A1**
(43) Date of publication of application: **02.07.2008**
(21) Application number: 06127254.8
(22) Date of filing: 27.12.2006
(51) Int. Cl.: H02K 7/06, H02K 49/06

(54) **Adjustement device for automatically activating the vehicle door of a motor vehicle**

(71) Applicant: Valeo Sicherheitssysteme GmbH, 85253 Erdweg (DE)
(72) Inventor: Orth, Dietmar, 85757, Karlsfeld (DE)
(74) Representative: Croonenbroek, Thomas Jakob

(57) **Abstract**

The invention relates to an adjustment device for automatically activating the vehicle door (2) of a motor vehicle (1) which comprises an arrangement of tubular housing parts (7, 8) which can be extended and retracted telescopically and which contain a spindle drive and an electromotive drive (9) which acts on the spindle drive, the output shaft (10) of the electromotive drive (9) being operatively connected to a brake device (15-15) in order to secure the position of the vehicle door (2) when the electromotive drive (9) is switched off.

For providing an adjustment device which comprises a low-noise brake device which can be manufactured in a compact fashion the invention proposes using a permanent-magnetic hysteresis brake as a brake device.

## Description

The invention relates to an adjustment device for automatically activating the vehicle door of a motor vehicle which comprises an arrangement of tubular housing parts which can be extended and retracted telescopically and which contain a spindle drive and an electromotive drive which acts on the spindle drive, the output shaft of the electromotive drive being operatively connected to a brake device in order to secure the position of the vehicle door when the electromotive drive is switched off. In this context, a vehicle door is understood in the following to be, inter alia, both the side doors and the tailgate or the boot lid of a vehicle.

A known adjustment device of the generic type comprises a tube arrangement which can be extended and retracted telescopically and which is driven by means of a spindle drive located in the tube arrangement. In this context, the spindle drive is connected to an electromotive drive which causes a spindle extending in the axial direction to rotate, said spindle then pushing a spindle nut, located in a guide along the longitudinal axis of the spindle, from a pulled-back position of rest into an extended position. In order to avoid undesired pivoting of the vehicle door when the electromotive drive is deactivated, but at the same time to be able to activate the vehicle manually with little application of force, the output shaft of the electromotive drive is operatively connected to a brake device which is arranged between the electromotive drive and a gearbox connected downstream.

A disadvantage of this known adjustment device is that the braking effect of the brake device is provided by means of a frictionally locking connection between the output shaft and parts which are fixed to the housing. However, frictionally locking brakes of this type not only require a relatively large amount of space but the elements which are frictionally locked to one another can also generate interference noises.

The invention is based on the object of specifying an adjustment device for automatically activating the vehicle door of a motor vehicle which comprises a lownoise brake device which can be manufactured in a compact fashion, in order to secure the position of the vehicle door.

This object is achieved according to the invention by means of the features of Claim 1. Further, particularly advantageous embodiments of the invention are disclosed in the subclaims.

The invention is based essentially on the idea of using a permanent-magnetic hysteresis brake as a brake device since brakes of this type are not only functionally reliable and contactless, and thus operate with little noise, but also operate without wear or need for maintenance and are relatively cost-effective to manufacture.

In the brake device, the output shaft of the electromotive drive can be connected in a rotationally fixed fashion to an annular or disc-shaped hysteresis element on which at least one permanent magnet acts, said permanent magnet being at a gap-shaped interval from the hysteresis element and being arranged fixed to the housing with respect to the tubular housing part which contains the electromotive drive. However, it is also possible to provide for the output shaft of the electromotive drive to be connected in a rotationally fixed fashion to at least one permanent magnet and to act on an annular or disc-shaped hysteresis element which is at a gap-shaped interval from the permanent magnet and is arranged fixed to the housing with respect to the tubular housing part which contains the electromotive drive.

In a first embodiment of the invention, a permanent magnet which has two pole shoes and is embodied in a U shape is mounted fixed to the housing in the adjustment device, the hysteresis element which is connected in a rotationally fixed fashion to the shaft of the electromotive drive being arranged preferentially between the pole shoes.

A solenoid which can be energized in order to strengthen or weaken the magnetic field generated by the permanent magnet can preferably be arranged on the side of the permanent magnet (or of a magnetic material connecting the pole shoes) which lies opposite the pole shoes.

With such an arrangement it is possible to ensure, for example, that the braking effect of the brake device is correspondingly changed as a function of the angle of aperture of the tailgate. It is also possible to provide that when there is manual contact with the tailgate, the braking force of the brake device is reduced by means of a sensor so that the operator only has to apply a very small force in order to close the tailgate, for example.

Furthermore, it is possible for a sensor device for determining the rotational speed of the output shaft of the electromotive drive to be arranged in the interior space which is encapsulated by the limbs of the permanent magnet. In this context, it has proven advantageous if the sensor device is composed of a magnetic disc which is connected in a rotationally fixed fashion to the output shaft of the electromotive drive and has at least two) viewed in the circumferential direction, magnetic areas with different polarity and of at least two magnetic field sensors which sense the magnetic areas of the magnetic disc.

However, the pole arrangement may also be composed of the poles of a plurality of separate permanent magnets which are connected to one another via magnetically permeable elements (for example of soft iron).

In a second embodiment of the invention, a plurality of permanent magnets are attached distributed uniformly over the circumference of a carrier part, wherein, viewed in the circumferential direction, adjacent permanent magnets have different polarity, and wherein the carrier part is connected in a rotationally fixed fashion to the output shaft of the electromotive drive, and the annular hysteresis element is connected in a rotationally fixed fashion to the housing part of the adjustment device via a securing means.

The arrangement of the brake device in an electromotive drive with a gearbox connected downstream may be positioned either between the electromotive drive and the gearbox or between the gearbox and the spindle drive. However, it has proven advantageous to connect the brake device directly downstream of the electromotive drive (for example an electric motor without intermediate gearing) since the braking torque which then has to be applied can be relatively small.

The adjustment device according to the invention can be constructed in a way which is particularly economical in terms of space if the electromotive drive (electric motor) is selected such that it has an output shaft which completely penetrates the stator, the output shaft being connected to the change speed gearbox which is generally necessary on its side facing the spindle drive and to the brake device on the opposite side.

In order to be able to adjust the braking torque of the brake device, for example, very precisely in a manual fashion (for example to a basic value as a function of the type of vehicle), the arrangement of the poles of the permanent magnet or magnets and/or the hysteresis element can be of variable design such that the width of the gap between the poles of the permanent magnet or magnets and the hysteresis element can be varied in a predefined fashion, such as is known, for example, from DE 197 05 290 A1.

Further details and advantages of the invention emerge from the following exemplary embodiments which are explained with reference to figures, of which:
Figure 1 is a schematic perspective view of the rear region of a motor vehicle with the tailgate opened and laterally arranged adjustment device according to the invention;
Figure 2 is a side view as a partial section through the adjustment device according to the invention which is illustrated in Figure 1, with a first exemplary embodiment of a hysteresis brake;
Figure 3 shows the longitudinal section through a second exemplary embodiment of a hysteresis brake;
Figure 4 is a plan view of the hysteresis brake illustrated in Figure 3, from the side designated by III in Figure 4;
Figures 5 and 6 show the views of a third exemplary embodiment of a hysteresis brake, corresponding to Figures 3 and 4.

Figure 7 shows the longitudinal section through a fourth exemplary embodiment of a hysteresis brake.

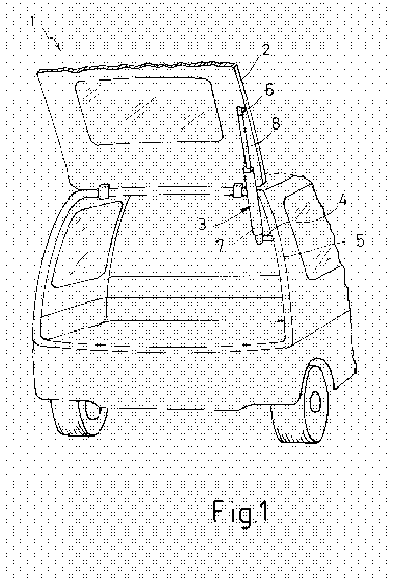

In Figure 1, the numeral 1 designates a motor vehicle which has a tailgate 2 which can be pivoted by an adjustment device 3 according to the invention from a closed position into the opened position illustrated in Figure 1, and if appropriate in turn into the closed position. The adjustment device 3 according to the invention is connected here via a first angular joint 4 to the bodywork 5 of the motor vehicle 1 and via a second angular joint 6 to the tailgate 2. For this reason it replaces the gas springs which are usually provided for opening the tailgate 2 in motor vehicles.

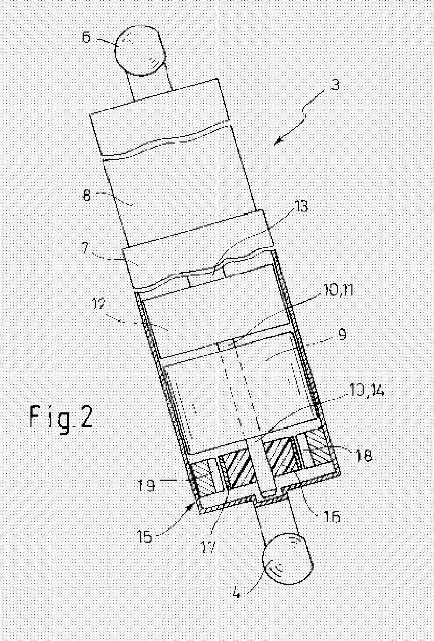

The adjustment device 3 comprises two tubular housing parts 7, 8 which can be extended and retracted telescopically. In the first tubular housing part 7, with the larger diameter, an electromotive drive (electric motor) 9 (Figure 2) is located. The latter has an output shaft 10 which penetrates the stator of the electric motor 9 and is connected on its first side 11 to a non-self-locking change speed gearbox 12 which is connected downstream axially. The change speed gearbox 12 is connected via its output shaft 13 to a spindle drive (not illustrated).

On the second side 14 facing away from the change speed gearbox 12, the output shaft 10 of the electric motor 9 is connected according to the invention to a hysteresis brake 15 which is excited by a permanent magnet.

The hysteresis brake 15 comprises essentially a disc-shaped carrier part 16 which is composed, for example, of plastic and which is connected in a rotationally fixed fashion to the output shaft 10 of the electric motor 9 and on which an annular hysteresis element 17 (for example made of a softmagnetic material or in particular made of oerstite 70) is attached. Two poles, arranged distributed uniformly over the circumference of the hysteresis element 17, of two permanent magnets 18, 19 are provided at a predefined radial distance from the hysteresis element 17.

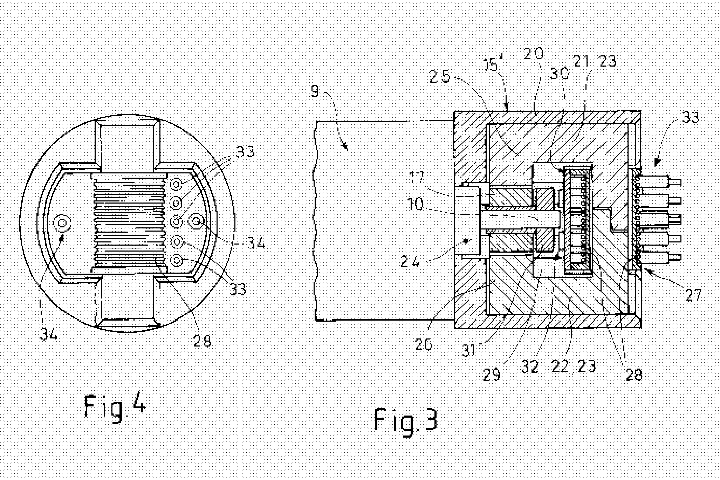

Figures 3 and 4 show a further exemplary embodiment of a hysteresis brake 15' which is connected to the electric motor 9 and is arranged at the rear in the adjustment device 3. Here, the first housing part 7 and the first angular joint 4 are omitted for the sake of clarity.

The hysteresis brake 15' is composed of a securing means 20 in which a permanent magnet 23 which is composed of two component magnets 21, 22 which adjoin one another is arranged. The permanent magnet 23 is embodied in a U shape and has, on its first side 24, pole shoes 25, 26 which in turn act on an annular hysteresis element 17 which is connected in a rotationally fixed fashion to the output shaft 10 of the electric motor 9.

On its second side 27 lying opposite the first side 24, a solenoid 28 which can be activated by means of a control device (not illustrated) and which strengthens or weakens the magnetic field of the permanent magnet 23 is arranged on the permanent magnet 23 so that the braking torque of the brake device 15' is correspondingly strengthened or weakened.

In this exemplary embodiment, the interior space 29 which is enclosed by the limbs of the permanent magnet 23 is advantageously used for the space-saving arrangement of a sensor device 30 by means of which the rotational speed of the output shaft 10 of the electric motor 9 can be determined. The control device (not illustrated) then calculates the adjustment travel of the adjustment device 3, and thus the respective angular position of the vehicle door 2, from this rotational speed.

In the present case, the sensor device 30 is composed of an additional magnetic disc 31 which is mounted on the output shaft 10 and has, viewed in the circumferential direction, at least two areas with differing polarity. Furthermore, the sensor device 30 contains at least two magnetic field sensors 32 which sense the magnetic areas of the magnetic disc 31.

The electric connecting lines of the magnetic field sensors 32 and of the solenoid 28 which are connected to corresponding control devices are designated by the reference numerals 33 and 34 in Figures 3 and 4.

Of course, the invention is not restricted to the adjustment devices described above. For example, depending on the specific embodiment, in the exemplary embodiment illustrated in Figures 3 and 4, it is possible to dispense with the additional magnetic disc 31 and the magnetic leakage field emanating from the pole shoes 25, 26 can be evaluated with the magnetic field sensors 32.

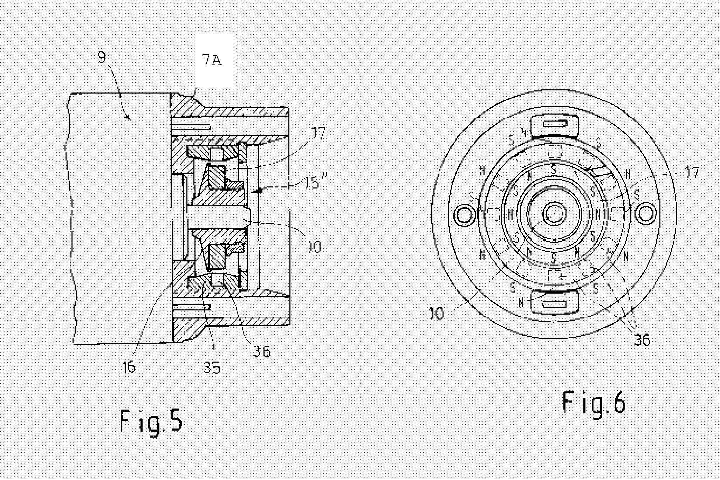

In addition, the hysteresis brake can also comprise more than two poles (permanent magnets). Such an exemplary embodiment of a hysteresis brake which is designated by 15'is represented in Figures 5 and 6 in which permanent magnets 36 are arranged distributed uniformly over the circumference on a securing means 35 which is connected in a rotationally fixed fashion to a casing part 7A, adjacent magnets having different polarity.

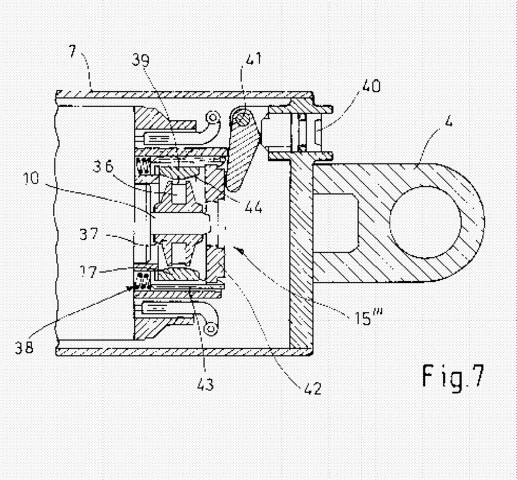

However, it is also possible to provide for the permanent magnets to be arranged in a rotationally fixed fashion to the output shaft 10 of the electric motor 9 on a carrier part 37 and for the annular hysteresis element to be connected in a rotationally fixed fashion to the first housing part 7 of the adjustment device 3. Such an exemplary embodiment is shown in Figure 7. Here, the permanent magnets are in turn designated by 36 and the hysteresis element by 17.

In this exemplary embodiment, there is also provision for the hysteresis element 17 to be arranged so as to be axially displaceable counter to the pressure of two springs 38 in such a way that a change in the width of the air gap 39 between the hysteresis element 17 and the respective permanent magnet 36 occurs, and there is thus a change in the net flux, so that the braking torque of the hysteresis brake 15' can be particularly easily regulated.

For this purpose, a thrust washer 42 is pushed axially using an actuating lever 41 and by means of an actuating screw 40, and said thrust washer 42 then acts on the holding element 43 of the annular hysteresis element 17. In the process, the contour 44 of the hysteresis element 17 which faces the permanent magnets 36 and determines the axial change in the air gap can also have a different shape from the one illustrated in Figure 7 (may be of wedge-shaped design, for example).

A further possible way of changing the air gap between the hysteresis element and the magnet arrangement and thus of regulating the braking torque of the brake device can be for the hysteresis brake to be composed, for example, of a disc-shaped hysteresis element which is connected in a rotationally fixed fashion to the output shaft, and a ring which is arranged axially opposite and is composed of a magnetized permanently magnetic material (for example Oxite 360) the hysteresis element then being able to be arranged in an axially displaceable fashion, by means of relatively simple measures.

The invention as described above has many advantages as in particular the fact to provide an adjustement device where the brake device is noiseless and does not loose efficiency over time because it does not have any wearing parts.

## Claims

1. Adjustment device for automatically activating the vehicle door (2) of a motor vehicle (1) which comprises an electromotive drive (9) and an arrangement of tubular housing parts (7, 8) which can be extended and retracted telescopically by said electromotive drive (9), **characterized in that** the output shaft (10) of the electromotive drive (9) is operatively connected to a brake device (15-15) in order to secure the position of the vehicle door (2) when the electromotive drive (9) is switched off, and that the brake device (15-15) is a permanent-magnet-excited hysteresis brake.

2. Adjustment device according to Claim 1, **characterized in that** the permanent-magnet-excited hysteresis brake comprises an annular or disc-shaped hysteresis element (17) on which at least one permanent magnet (18, 19; 23) acts, said permanent magnet (18, 19; 23) being at a gap-shaped interval from the hysteresis element (17).

3. Adjustment device according to Claim 2, **characterized in that** one of said annular or disc-shaped hysteresis element (17) or at least one permanent magnet (18, 19; 23) is connected in a rotationally fixed fashion to the output shaft (10) of the electromotive drive (9) and that the other one of said annular or disc-shaped hysteresis element (17) or at least one permanent magnet (18, 19; 23) is arranged fixed to the housing with respect to the tubular housing part (7) which contains the electromotive drive (9).

4. Adjustment device according to Claim 2 or 3, **characterized in that** a permanent magnet (23) which has two pole shoes (25, 26) and is embodied in a U shape is provided fixed to the housing in the adjustment device (3), the hysteresis element (17) which is connected in a rotationally fixed fashion to the output shaft (10) of the electromotive drive (9) is arranged between the pole shoes (25, 26).

5. Adjustment device according to one of Claims 1 to 4, **characterized in that** it further comprises a solenoid (28) which can be energized in order to strengthen or weaken the magnetic field generated by the permanent magnet (23), preferentially arranged on the side (27) of the permanent magnet (23) which lies opposite the pole shoes (25, 26).

6. Adjustment device according to one of Claims 2 to 5, **characterized in that** it further comprises a sensor device (30) for determining the rotational speed of the output shaft (10) of the electromotive drive (9), preferentially arranged in the interior space (29) which is encapsulated by the limbs of the permanent magnet (23).

7. Adjustment device according to Claim 6, **characterized in that** the sensor device (30) comprises a magnetic disc (31) which is connected in a rotationally fixed fashion to the output shaft (10) of the electromotive drive (9) and has at least two, viewed in the circumferential direction, magnetic areas with different polarity and of at least two magnetic field sensors (32) which sense the magnetic areas of the magnetic disc (31).

8. Adjustment device according to one of Claims 2, 3, 5, 6 or 7, **characterized in that** a plurality of permanent magnets (36) are attached distributed uniformly over the circumference of a carrier part (37), wherein, viewed in the circumferential direction, adjacent permanent magnets (36) have different polarity, and wherein the carrier part (37) is connected in a rotationally fixed fashion to the output shaft (10) and the annular hysteresis element (17) is connected in a rotationally fixed fashion to a casing part (7A) of the adjustment device (3) via a securing means.

9. Adjustment device according to one of Claims 1 to 8, **characterized in that** the permanent magnet arrangement and/or the hysteresis element (17) are/is of variable design such that the width of the air gap (39) between the poles of the permanent magnets (36) and the hysteresis element (17) can be varied in a predefined fashion.

10. Adjustment device according to one of Claims 1 to 9, **characterized in that** the electromotive drive (9) comprises an electronic motor whose output shaft (10) is made to extend completely through the stator, the output shaft (10) being connected to a change speed gearbox (12) on its side facing a spindle drive and to the brake device (15) on its opposite side.

11. Adjustment device according to one of Claims 1 to 9, **characterized in that** in an electromotive drive (9) with a change speed gearbox (12) connected downstream, the brake device (15) is arranged between the electromotive drive (9) and the change speed gearbox (12).
